# EUROPEAN PATENT APPLICATION

(11) **EP 4 316 699 A1**
(43) Date of publication of application: **07.02.2024**
(21) Application number: 23185474.6
(22) Date of filing: 14.07.2023
(51) Int. Cl.: B22F 10/28, B22F 10/322, B22F 10/73, B22F 12/70, B33Y 10/00, B33Y 30/00, B33Y 40/00, B22F 10/77

(54) **ADDITIVE MANUFACTURING APPARATUS COMPRISING A TRANSFER DEVICE THAT TRANSFERS THE METAL POWDER TOGETHER WITH THE INERT GAS**

(30) Priority: 04.08.2022 JP 2022124641
(71) Applicant: Sodick Co., Ltd., Kanagawa 224-8522 (JP)
(72) Inventor: NAKAMURA, Naoto, Yokohama, Kanagawa, 224-8522 (JP)
(74) Representative: Becker, Eberhard

(57) **Abstract**

An additive manufacturing apparatus includes a chamber (7), an inert gas supplier (2A), a material recovery pipeline (8A), a material tank (62), a material replenishment pipeline (8B), a transfer device (61), a classifier (63), a gas discharge pipeline (9D), and a pump (64). The transfer device (61) transfers a metal powder together with an inert gas. The gas discharge pipeline (9D) is connected to the transfer device (61) and the chamber (7). The pump (64) sends the inert gas discharged from the transfer device (61) to the chamber (7).

## Description

### BACKGROUND

### [Technical Field]

The disclosure relates to an additive manufacturing apparatus.

### [Related Art]

An additive manufacturing apparatus that performs powder bed fusion manufactures a desired three-dimensional object by repeating a process of evenly spreading a powder material to a predetermined thickness to form a material layer, and irradiating the material layer with a laser beam or an electron beam to melt or sinter the material layer and form a solidified layer. A metal powder may be used as the material.

When irradiating a material layer made of a metal powder with a laser beam or an electron beam, metal vapor called fume is generated. To prevent leakage of the fume, it is preferable to perform additive manufacturing in a sealed chamber. When melting or sintering the metal powder, degradation and quality deterioration my occur if the metal powder is exposed to an atmosphere containing oxygen or other gas. Further, a metal powder made of a metal that is easily oxidizable such as an aluminum material and a titanium material may ignite in an environment containing oxygen. Thus, it is preferable that the chamber be filled with an inert gas at a predetermined concentration that does not substantially react with the metal powder.

Excess metal powder that is supplied to the chamber but not used in the formation of the solidified layer may be recovered during or after the additive manufacturing, and then reused after impurities are removed. US Patent No. 10,569,331 B2, US Patent No. 10,960,467 B2, and US Patent Application Publication No. US2022/0118524 A1 each disclose an additive manufacturing apparatus including a device that recovers and resupplies a metal powder. When transporting the metal powder, a gas flow of the inert gas may be generated to transfer the metal powder in the gas flow.

### SUMMARY

### Problems to Be Solved

When discharging the metal powder from the chamber in the gas flow of the inert gas, since the inert gas in the chamber is also discharged, the pressure in the chamber is decreased. In the chamber with decreased pressure, outside air is more likely to flow in through inevitable gaps, and an inert gas concentration in the chamber decreases.

To maintain an inert gas atmosphere in the additive manufacturing apparatus and reduce a use amount of the inert gas, an additive manufacturing apparatus with high airtightness is required. In particular, when transporting excess material in the gas flow of the inert gas, a configuration that consumes less inert gas is required.

### Means for Solving Problems

According to the disclosure, an additive manufacturing apparatus includes a chamber, an inert gas supplier, a material recovery pipeline, a material tank, a material replenishment pipeline, a transfer device, a classifier, a gas discharge pipeline, and a pump. The chamber covers a build region, which is a region where a three-dimensional object is capable of being manufactured, and is filled with an inert gas. The inert gas supplier supplies the inert gas to the chamber. The material recovery pipeline is connected to the chamber, and a metal powder discharged from the chamber flows through the material recovery pipeline. The metal powder is stored in the material tank. The material replenishment pipeline is connected to the material tank and the material recovery pipeline, and the metal powder discharged from the material tank flows through the material replenishment pipeline. The transfer device transfers the metal powder together with the inert gas and includes: a vacuum container; a material suction port provided at the vacuum container and connected to the material recovery pipeline; a gas discharge port provided at the vacuum container to discharge the inert gas; and a material discharge port provided at the vacuum container to discharge the metal powder. The classifier removes impurities from the metal powder transferred by the transfer device. The gas discharge pipeline is connected to the gas discharge port and the chamber. The pump is provided at the gas discharge pipeline and sends the inert gas discharged from the transfer device to the chamber.

### Effects

The additive manufacturing apparatus of the disclosure includes the transfer device which transfers the metal powder discharged from the chamber together with the inert gas, and the gas discharge port of the transfer device and the chamber are connected by the gas discharge pipeline. With the pump provided at the gas discharge pipeline, a gas flow of the inert gas which transfers the metal powder to the transfer device is generated, and the inert gas discharged from the transfer device is returned to the chamber. According to such a configuration, since consumption of the inert gas can be reduced, a supply amount of the inert gas to the chamber can be reduced, and the inert gas concentration in the chamber can be maintained at a predetermined value. Further, since a decrease in pressure in the chamber is prevented, intrusion of the outside air into the chamber can also be suppressed.

### BRIEF DESCRIPTION OF THE DRAWINGS

FIG. 1 is a schematic view showing a configuration of an additive manufacturing apparatus according to an embodiment.
FIG. 2 is a cross-sectional view of a transfer device according to the embodiment.

### DESCRIPTION OF THE EMBODIMENTS

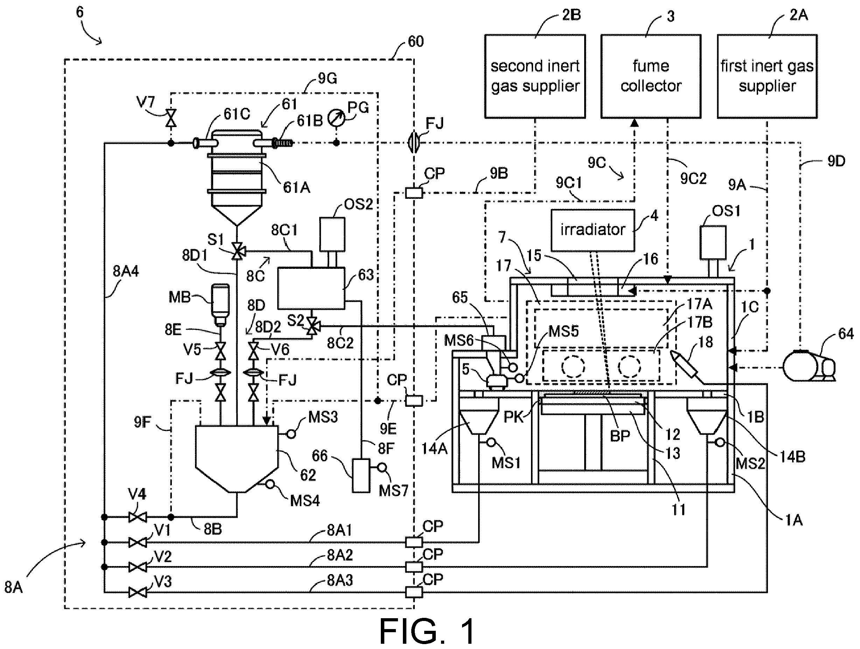

An additive manufacturing apparatus according to an embodiment described below is simply an example, and various modifications are possible within the scope of the technical concept of the disclosure. FIG. 1 shows an example of a schematic configuration of an additive manufacturing apparatus according to this embodiment. For convenience of illustration, directions are defined in the description below with FIG. 1 serving as a front view, but this does not limit the positional relationship among the components. The additive manufacturing apparatus of the disclosure includes an apparatus body 1, a first inert gas supplier 2A and a second inert gas supplier 2B serving as inert gas suppliers, a fume collector 3, an irradiator 4, a recoater 5, a material reuse device 6, and a chamber 7.

The components are connected by pipings. The pipings include a transfer piping that transfers a metal powder as a material and a gas piping through which substantially only an inert gas flows. In FIG. 1, the transfer piping is shown in solid lines, and the gas piping is shown in dot-dash lines. The transfer piping constitutes a part of a transfer path of the metal powder and includes a material recovery pipeline 8A, a material replenishment pipeline 8B, a material supply pipeline 8C, a material storage pipeline 8D, a material bottle connection pipeline 8E, and an impurity discharge pipeline 8F. The gas piping includes a first gas supply pipeline 9A, a second gas supply pipeline 9B, a fume collection pipeline 9C, a gas discharge pipeline 9D, a first bypass pipeline 9E, a second bypass pipeline 9F, and a pressure recovery pipeline 9G.

The apparatus body 1 includes a bed 1A, a base table 1B, and a build cover 1C. The base table 1B and the build cover 1C constitute the chamber 7.

The bed 1A is a foundation structure of the apparatus body 1. The bed 1A may be mainly composed of a metal frame and metal plates. A build tank 11 formed by four walls is provided in the vicinity of a center of the bed 1A. A desired three-dimensional object is additive manufactured in the build tank 11.

The base table 1B is a workbench for performing additive manufacturing. The base table 1B is horizontally installed over the entire surface of the bed 1A. A substantially rectangular through-hole is formed in the vicinity of a center of the base table 1B. A build table 12 having an outer shape conforming to an inner shape of the through-hole is accommodated in the build tank 11. The build table 12 substantially serves as a bottom plate of the build tank 11.

The build table 12 has a build region which is a region where a desired three-dimensional object can be manufactured. The build table 12 is raised and lowered by a driving device including any actuator. A space between the build table 12 and the walls constituting the build tank 11 is sealed by a ring-shaped packing PK provided around an end face of the build table 12. When the build table 12 reciprocates in an up-down direction, the build table 12 slides in the build tank 11 with the packing PK interposed between the build table 12 and the build tank 11. Thus, when the build table 12 is raised and lowered, the metal powder distributed on the build table 12 is prevented from leaking out of the build tank 11 and falling to the bed 1A. A base plate BP may be placed on the build table 12, and the three-dimensional object may be formed on the base plate BP.

The build table 12 may be configured to be capable of adjusting a temperature. In this embodiment, a temperature adjusting device 13 is provided directly under the build table 12. The temperature adjusting device 13 includes one, or preferably both, of a heater and a cooler. The heater may be an electric heater. The cooler may be a cooling piping configured to allow a refrigerant to flow.

A chute that collects excess metal powder is provided under the base table 1B. In this embodiment, discharge openings are formed at left and right ends of the base table 1B, and a first chute 14A and a second chute 14B are provided directly below the discharge openings, respectively. That is, the first chute 14A and the second chute 14B are provided with the build tank 11 being positioned therebetween.

During the additive manufacturing, as the recoater 5 reciprocates on the base table 1B, the excess metal powder distributed on the base table 1B is pushed out to the discharge openings and falls into the first chute 14A or the second chute 14B. Further, in the case where the recoater 5 is configured to be capable of storing the metal powder therein, by moving the recoater 5 to above the discharge opening, the metal powder inside the recoater 5 is discharged into the first chute 14A or the second chute 14B. The first chute 14A and the second chute 14B may have a funnel shape. The metal powder discharged from the chamber 7 is stored in the first chute 14A and the second chute 14B. Material sensors MS1 and MS2 are respectively provided at the first chute 14A and the second chute 14B. The material sensors MS1 and MS2 detect that a predetermined amount of the metal powder has been stored in the first chute 14A and the second chute 14B.

A suction nozzle 18 is arranged in the chamber 7. The suction nozzle 18 is configured to be capable of sucking the metal powder present in the build tank 11 or on the base table 1B.

The build cover 1C includes a plurality of wall plates and one or more top plates. The build cover 1C is installed on the bed 1A to cover and surround an upper surface of the base table 1B. In this manner, the chamber 7, which is composed of the base table 1B and the build cover 1C, covers the build region.

During the additive manufacturing, the chamber 7 is filled with an inert gas. The chamber 7 is configured to be substantially sealable, but inevitable gaps are present. For example, a slight gap may be formed between the base table 1B and a guide that guides reciprocation of the recoater 5.

When a gas pressure in the chamber 7 becomes higher than an outside atmospheric pressure, the inert gas in the chamber 7 flows out of the chamber 7 from the gaps. On the other hand, when the gas pressure in the chamber 7 becomes lower than the outside atmospheric pressure, outside air flows into the chamber 7 from the gaps. To prevent intrusion of the outside air into the chamber 7 and maintain an inert gas concentration in the chamber 7 at a predetermined value or higher, it is desirable that the gas pressure in the chamber 7 be maintained at the same value as the atmospheric pressure or slightly higher than the atmospheric pressure. In this embodiment, by constantly supplying new inert gas from the inert gas supplier to the additive manufacturing apparatus, the gas pressure in the chamber 7 is maintained at a desired value. An oxygen concentration in the chamber 7 is measured by an oxygen concentration meter OS1.

A window 15 is provided at the top plate of the build cover 1C. The window 15 is configured to be capable of allowing a laser beam to pass through. The laser beam emitted by the irradiator 4 passes through the window 15 and is irradiated onto a material layer made of the metal powder formed on the build table 12.

A contamination prevention device 16 is provided to surround the window 15. The contamination prevention device 16 is a cylindrical member that is supplied with the inert gas therein and ejects the inert gas downward. Thus, a fume generated during formation of a solidified layer is prevented from adhering to the window 15.

An opening communicating with the inside and outside of the chamber 7 is formed at a front wall of the build cover 1C. An operator may access the inside of the chamber 7 through the opening. A front door 17 configured to capable of being opened and closed is provided at the opening. The front door 17 has an inspection window 17A and a glove box 17B. The glove box 17B has a pair of through-holes and a pair of gloves that close the through-holes. Using the glove box 17B, the operator may perform an operation in the chamber 7 with the front door 17 being closed. For example, by operating the suction nozzle 18 through the glove box 17B, the operator may perform a cleaning operation to remove the metal powder from the chamber 7 with the inside of the chamber 7 being substantially sealed.

The inert gas supplier directly or indirectly supplies a clean inert gas at a predetermined concentration to the chamber 7. The inert gas may be any gas that does not substantially react with the metal powder and may be nitrogen gas or noble gas. In the case where the metal powder is a material that is less likely to nitride, nitrogen gas is advantageous as it is relatively inexpensive and readily available. When the metal powder is an aluminum material or a titanium material, noble gas may be used to prevent nitriding. Argon gas is commonly used as the noble gas. The aluminum material includes not only pure aluminum but also alloys with aluminum as a main component. The titanium material includes not only pure titanium but also alloys with titanium as a main component.

When the inert gas is nitrogen, the inert gas supplier may be a nitrogen generator that generates nitrogen gas from air, or a gas cylinder that stores nitrogen gas at a predetermined concentration. When the inert gas is argon gas, the inert gas supplier may be a gas cylinder that stores argon gas at a predetermined concentration. A control valve may be provided at the inert gas supplier.

In the case where a gas cylinder is used as the inert gas supplier, there is a limitation on the continuous operation time. Further, argon gas is more expensive compared to nitrogen gas. Since the additive manufacturing apparatus of this embodiment can suppress a use amount of the inert gas, it is particularly advantageous in the case where argon gas is used as the inert gas.

In this embodiment, the first inert gas supplier 2A and the second inert gas supplier 2B are provided as the inert gas supplier. The first inert gas supplier 2A is connected to the chamber 7 and the contamination prevention device 16 via the first gas supply pipeline 9A. The first inert gas supplier 2A supplies the inert gas to the chamber 7 and the contamination prevention device 16. The second inert gas supplier 2B is connected to the material reuse device 6 via the second gas supply pipeline 9B. The second inert gas supplier 2B supplies the inert gas to the material reuse device 6.

In this embodiment, two inert gas suppliers are provided, but one or more inert gas suppliers may be provided. For example, one inert gas supplier may supply the inert gas to the chamber 7 and the material reuse device 6. Further, the inert gas supplier may be configured to optionally switch a supply destination of the inert gas. For example, the gas piping may be configured such that the inert gas can be selectively supplied to the chamber 7 from both of the first inert gas supplier 2A and the second inert gas supplier 2B.

The fume collector 3 removes a fume from the inert gas, which is discharged from the chamber 7 and includes the fume, and returns a clean inert gas to the chamber 7. The fume collector 3 may have an electrostatic precipitator or a filter. The fume collection pipeline 9C connects the chamber 7 and the fume collector 3. Specifically, the fume collection pipeline 9C includes a pipeline 9C1 connected to the chamber 7 and an inlet of the fume collector 3, and a pipeline 9C2 connected to an outlet of the fume collector 3 and the chamber 7. The inert gas discharged from the chamber 7 via the pipeline 9C1 is sent to the fume collector 3. The fume collector 3 removes the fume from the inert gas and returns the inert gas to the chamber 7 via the pipeline 9C2. To promote circulation of the inert gas, a fan may be provided at the wall of the build cover 1C to increase a flow rate of the inert gas sent to the fume collection pipeline 9C. In this embodiment, the fume collector 3 directly returns the inert gas to the chamber 7, but the fume collection pipeline 9C may also be connected to the second gas supply pipeline 9B to supply the inert gas to the material reuse device 6.

In the chamber 7, the position and quantity of supply ports of the inert gas from the inert gas supplier and the fume collector 3 are not limited. Further, in the chamber 7, the position and quantity of discharge ports of the inert gas to the fume collector 3 are not limited. The supply port and the discharge port may be provided at the build cover 1C or may be provide at a component arranged in the chamber 7 such as the recoater 5.

The irradiator 4 of this embodiment irradiates the build region in the chamber 7 with a laser beam. The irradiator 4 includes a laser beam source that outputs a laser beam and a scanner that scans the laser beam. The scanner is, for example, a galvano scanner. Further, the irradiator 4 may be configured to capable of irradiating an electron beam instead of a laser beam. In that case, the irradiator 4 includes a cathode electrode that emits electrons, an anode electrode that converges and accelerates the electrons, a solenoid that forms a magnetic field and converges the direction of the electron beam in one direction, and a collector electrode that is electrically connected to a material layer which is an irradiated body and applies a voltage between the collector electrode and the cathode electrode. That is, the irradiator 4 may be any device that irradiates the material layer formed in the build region with a laser beam or an electron beam and sinters or melts the metal powder at an irradiation position to form a solidified layer.

The recoater 5 disperses and flattens the metal powder in the build region to form a material layer of a predetermined thickness. Generally, the base plate BP is placed on the build table 12, and the first material layer is formed on the base plate BP.

In this embodiment, the recoater 5 is configured to be movable in the horizontal direction while discharging the metal powder stored therein. The recoater 5 of this embodiment includes a recoater head that is capable of storing the metal powder and discharges the metal powder from a bottom surface, a blade that is attached to a lateral surface of the recoater head to level the metal powder, and a driving device that includes any actuator for reciprocating the recoater head in the horizontal direction. A material sensor MS5 is provided at the recoater head of the recoater 5. The material sensor MS5 detects that the metal powder in the recoater head is insufficient and needs replenishment. The recoater 5 does not need to have the function of storing the metal powder therein, but is at least configured to be capable of moving the blade.

The additive manufacturing apparatus may include a machining device that performs cutting on the solidified layer. The machining device includes, for example, a machining head configured to be movable in the chamber 7, and a spindle provided at the machining head to hold and rotate a cutting tool. Cutting may be performed on the solidified layer every time a predetermined quantity of solidified layers are formed.

The material reuse device 6 recovers the metal powder from the chamber 7, removes impurities, and then resupplies the metal powder to the chamber 7. Impurities include spatter that scatters when the laser beam or the electron beam is irradiated onto the material layer, and cutting chips that are generated during cutting. The material reuse device 6 includes a transfer device 61, a material tank 62, a classifier 63, and a pump 64.

The transfer device 61, the material tank 62, and the classifier 63 are accommodated in a casing 60 and constitute one unit. The casing 60 may be configured to be movable, and may be configured to be detachably with respect to the apparatus body 1. In this embodiment, the pump 64 is not accommodated in the casing 60 and is installed outside the apparatus body 1. However, the pump 64 may also be accommodated in the casing 60. The pipeline on the apparatus body 1 side and the pipeline on the material reuse device 6 side may be connected by any connecting member such as a ferrule FJ or a coupler CP.

The material tank 62 stores the metal powder. In this embodiment, the material tank 62 is configured to be capable of storing both an unused metal powder and the metal powder recovered from the chamber 7. The metal powder recovered from the chamber 7 may be sent to the material tank 62 before the impurities are removed, or may be sent to the material tank 62 after the impurities are removed. The material tank 62 has airtightness. The second gas supply pipeline 9B is connected to the material tank 62, and the inert gas is filled up in the material reuse device 6 via the material tank 62. A material sensor MS3 and a material sensor MS4 are provided at the material tank 62. The material sensor MS3 and the material sensor MS4 respectively detect an upper limit and a lower limit of the metal powder in the material tank 62.

The material tank 62 is configured to be connectable to a material bottle MB via the material bottle connection pipeline 8E. When replenishing the metal powder from the material bottle MB to the material tank 62, first, one or more on-off valves V5 provided at the material bottle connection pipeline 8E are closed. After connecting the material bottle connection pipeline 8E to the material bottle MB, the on-off valve V5 is opened, and the metal powder stored in the material bottle MB falls into the material tank 62. In this manner, it is possible to replenish the metal powder in the material tank 62 while maintaining airtightness. In this embodiment, the material bottle MB is connected to the material tank 62, but the material bottle MB may also be configured to be connected to another component such as a material container 65.

The material recovery pipeline 8A is connected to the chamber 7, and is directly connected to the first chute 14A, the second chute 14B, and the suction nozzle 18, and the metal powder discharged from the chamber 7 together with the inert gas flows through the material recovery pipeline 8A. Specifically, the material recovery pipeline 8A includes a pipeline 8A1 that is connected to the first chute 14A and provided with an on-off valve V1, a pipeline 8A2 that is connected to the second chute 14B and provided with an on-off valve V2, a pipeline 8A3 that is connected to the suction nozzle 18 and provided with an on-off valve V3, and a pipeline 8A4 that is connected to the pipelines 8A1, 8A2, and 8A3 and the transfer device 61.

The material replenishment pipeline 8B is connected to the material tank 62 and the pipeline 8A4 of the material recovery pipeline 8A, and the metal powder discharged from the material tank 62 together with the inert gas flows through the material replenishment pipeline 8B. An on-off valve V4 is provided at the material replenishment pipeline 8B. The first bypass pipeline 9E is connected to the chamber 7 and the material tank 62, and the inert gas flows through the first bypass pipeline 9E. The second bypass pipeline 9F is connected to the material tank 62 and the material replenishment pipeline 8B, and the inert gas flows through the second bypass pipeline 9F. With the first bypass pipeline 9E and the second bypass pipeline 9F, pressure is equalized between the chamber 7, the material tank 62, and the material replenishment pipeline 8B, so transfer of the metal powder from the material tank 62 can be suitably performed.

When transferring the metal powder, the on-off valve corresponding to a transfer source is selectively opened. That is, when transferring the metal powder from the first chute 14A, the on-off valve V1 is opened, and the on-off valves V2, V3, and V4 are closed. When transferring the metal powder from the second chute 14B, the on-off valve V2 is opened, and the on-off valves V1, V3, and V4 are closed. When transferring the metal powder from the suction nozzle 18, the on-off valve V3 is opened, and the on-off valves V1, V2, and V4 are closed. When transferring the metal powder from the material tank 62, the on-off valve V4 is opened, and the on-off valves V1, V2, and V3 are closed. However, the metal powder may also be transferred simultaneously from a plurality of positions, and in that case, a plurality of on-off valves are opened simultaneously.

The transfer device 61 sucks the metal powder in the chamber 7 and the metal powder in the material tank 62 together with the inert gas, and carries and transfers the metal powder in the gas flow of the inert gas. In particular, the transfer device 61 of this embodiment is arranged at a highest position of the transfer path of the metal powder and transfers the metal powder to the highest position of the material reuse device 6. By installing the transfer device 61 at the highest position, it is possible to supply and recover the metal powder by one transfer device. The configuration of the material reuse device 6 including only one transfer device is advantageous in that it facilitates maintenance and management of the material reuse device 6, enhances airtightness of the material reuse device 6, and minimizes contact between the metal powder and the outside air.

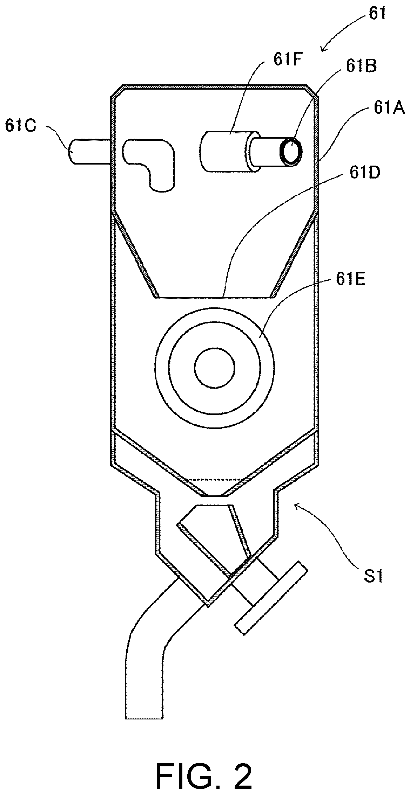

In this embodiment, the transfer device 61 may be a vacuum conveyor. As shown in FIG. 2, the transfer device 61 includes a vacuum container 61A, a gas discharge port 61B, a material suction port 61C, a material discharge port 61D of the metal powder, a bottom cover 61E, and a filter 61F. The vacuum container 61A is a container configured to be capable of having airtightness. The gas discharge port 61B, the material suction port 61C, and the material discharge port 61D are provided at the vacuum container 61A. The bottom cover 61E is driven by any actuator to open and close the material discharge port 61D. In this embodiment, the material discharge port 61D and the bottom cover 61E are circular, but they may also be in any shape. The filter 61F is provided at the gas discharge port 61B to prevent particles containing the metal material from intruding into the gas discharge pipeline 9D.

The gas discharge port 61B is connected to the chamber 7 via the gas discharge pipeline 9D and the pump 64. In other words, the gas discharge pipeline 9D is connected to the gas discharge port 61B and the chamber 7. The pump 64 is provided at the gas discharge pipeline 9D. That is, a suction port of the pump 64 is connected to the pipeline on the transfer device 61 side of the gas discharge pipeline 9D, and a discharge port of the pump 64 is connected to the pipeline on the chamber 7 side of the gas discharge pipeline 9D. The pump 64 does not have an inlet/outlet of the inert gas other than the suction port and the discharge port. In other words, the pump 64 has airtightness. The pump 64 functions as a driving source of the transfer device 61. With the pump 64, the inert gas in the chamber 7 flows through the material recovery pipeline 8A into the vacuum container 61A together with the metal powder from the material suction port 61C. With the pump 64, the inert gas in the vacuum container 61A is discharged from the gas discharge port 61B, passes through the gas discharge pipeline 9D, and is returned to the chamber 7. A pressure gauge PG may be provided at the gas discharge pipeline 9D.

The material suction port 61C is connected to the first chute 14A, the second chute 14B, the suction nozzle 18, and the material tank 62 via the material recovery pipeline 8A and the material replenishment pipeline 8B. The pipeline 8A4 is directly connected to the material suction port 61C. Upon driving the pump 64 with the bottom cover 61E closing the material discharge port 61D, the bottom cover 61E is sucked up in the direction of the vacuum container 61A and is fixed in a state of closing the material discharge port 61D. Upon closure of the material discharge port 61D, the vacuum container 61A substantially has airtightness.

By continuously operating the pump 64 while the vacuum container 61A has airtightness, the inert gas in the vacuum container 61A passes through the gas discharge pipeline 9D and is discharged into the chamber 7. As the pressure in the vacuum container 61A gradually decreases and the degree of vacuum increases, a difference in gas pressure occurs between the vacuum container 61A and the chamber 7, and the inert gas in the chamber 7 is sucked to the transfer device 61. Thus, the metal powder is carried in the gas flow of the inert gas and is transferred together with the inert gas through the material recovery pipeline 8A to the vacuum container 61A. Similarly, when transferring the metal powder from the material tank 62, the metal powder is transferred together with the inert gas to the vacuum container 61A.

The metal powder transferred into the vacuum container 61A freely falls owing to its own weight. When the bottom cover 61E is driven to open the material discharge port 61D, the metal powder that has reached the bottom of the vacuum container 61A falls from the material discharge port 61D. A switching valve S1 is provided below the material discharge port 61D. The switching valve S1 selectively switches a discharge destination of the metal powder falling from the material discharge port 61D to one of the material tank 62 and the classifier 63, which are installed at positions lower than the transfer device 61. The switching valve S1 may be integrally provided with the transfer device 61 as shown in FIG. 2, or may be provided independently.

In the additive manufacturing apparatus of this embodiment, a circulation path of the inert gas is formed to connect between the chamber 7 and the transfer device 61. This circulation path is a closed circuit that does not communicate with the outside of the additive manufacturing apparatus and is isolated from the outside air. That is, when transferring the metal powder, the inert gas is not discharged to the outside of the additive manufacturing apparatus. The transfer device 61 of this embodiment does not include a pressure reduction device (e.g., ejector) that assumes gas discharge to the outside of the additive manufacturing apparatus.

In the material reuse device 6 of this embodiment, while the inert gas in the chamber 7 continues to flow into the vacuum container 61A of the transfer device 61, the inert gas discharged from the gas discharge port 61B is returned to the chamber 7 by the pump 64 without being discharged to the outside of the material reuse device 6. Thus, even if new inert gas is not constantly supplied to the chamber 7, the pressure inside of the chamber 7 is basically not reduced, which makes it difficult for the outside air to enter the chamber 7. Further, the outside air substantially does not flow in midway of the material reuse device 6. Thus, the metal powder can be discharged from the chamber 7, which is sealed and under an inert gas atmosphere.

In the vacuum container 61A, it is sufficient to maintain the degree of vacuum of a level at which a suction force for transferring the metal powder can be obtained. Further, it is required that the gas discharge pipeline 9D is isolated from the outside air and the outside air does not flow in. The pump 64 may be a vacuum pump. The pump 64 is preferably a pump that has high airtightness and is suitable for a relatively low vacuum region, such as a vane pump.

During the transfer of the metal powder in the material reuse device 6, the inside of the material reuse device 6 is in a negative pressure state as a whole. Even after the transfer of the metal powder is completed and the pump 64 stops, the inside of the material reuse device 6 remains in the negative pressure state. If the inside of the material reuse device 6 is in the negative pressure state for a long time, there is a risk of intrusion of the outside air through slight gaps. Further, in this embodiment, during the transfer of the metal powder, the material discharge port 61D of the transfer device 61 is closed by the bottom cover 61E. When the inside of the vacuum container 61A is in the negative pressure state, it is difficult to open the bottom cover 61E.

The pressure recovery pipeline 9G is a pipeline configured to perform pressure recovery of the vacuum container 61A after the transfer of the metal powder, by supplying the inert gas from the chamber 7 to the transfer device 61. Specifically, the pressure recovery pipeline 9G is connected to the pipeline 8A4 of the material recovery pipeline 8A and the first bypass pipeline 9E, and the inert gas flows through the pressure recovery pipeline 9G. The pressure recovery pipeline 9G connects the material reuse device 6 and the chamber 7 without a device other than the pipeline interposed therebetween. The pressure recovery pipeline 9G may be directly connected to the chamber 7. However, by directly connecting to the first bypass pipeline 9E, it is not necessary to provide a coupler CP for connecting each pipeline constituting the pressure recovery pipeline 9G to the casing 60.

An on-off valve V7 that opens and closes the pressure recovery pipeline 9G may be provided at the pressure recovery pipeline 9G. The on-off valve V7 is closed during operation of the pump 64, i.e., during the transfer of the metal material. After the transfer of the metal material is completed and the pump 64 stops, the on-off valve V7 is opened to open the pressure recovery pipeline 9G. The on-off valve V7 may be closed after elapse of a certain period of time, or may remain opened until the pump 64 is started again. Upon opening of the pressure recovery pipeline 9G, since the gas pressure in the material reuse device 6 is lower than the gas pressure in the chamber 7, the inert gas in the chamber 7 flows into the material reuse device 6 through the pressure recovery pipeline 9G. In this manner, the pressure in the material reuse device 6 is recovered, and the bottom cover 61E can be easily opened.

If an amount of the inert gas discharged from the gas discharge pipeline 9D exceeds an amount of the inert gas supplied from the pressure recovery pipeline 9G, the pressure of the vacuum container 61A is reduced. Thus, it is not essential to provide the on-off valve V7.

The classifier 63 is provided lower than the transfer device 61 and discharges the metal powder downward after removing the impurities from the metal powder. The removed impurities are sent to a collection container 66 through the impurity discharge pipeline 8F. A material sensor MS7 may be provided at the collection container 66. The material sensor MS7 detects that the impurities in the collection container 66 reach a predetermined amount. The classifier 63 may be, for example, a sieve. In this embodiment, the classifier 63 is an ultrasonic sieve and includes a mesh filter, a filter case that accommodates the mesh filter, and a vibrating element that vibrates the mesh filter. The classifier 63 has airtightness. A switching valve S2 is provided below the classifier 63. The switching valve S2 selectively switches a discharge destination of the metal powder falling from the classifier 63 to one of the material tank 62 and the material container 65, which are installed lower than the transfer device 61. The switching valve S2 may be provided integrally with the classifier 63 or may be provided independently.

The material container 65 supplies the metal powder sent from the material reuse device 6 to the chamber 7 again. The material container 65 includes a connecting member that connects the material reuse device 6 and the chamber 7, and a guiding member that guides the metal powder to the recoater head of the recoater 5. The connecting member is, for example, a bellows-shaped passage that connects the switching valve S2 and the guiding member. The guiding member includes a storage chute that stores the metal powder and a shutter that switches ON/OFF of discharge of the metal material from the storage chute. In this embodiment, the material container 65 stores the metal powder sent from the classifier 63 and supplies the metal powder to the recoater head of the recoater 5. Upon detection of a shortage of the metal material in the recoater head by the material sensor MS5 of the recoater 5, the material container 65 opens a material discharge port and replenishes the metal material to the recoater head. A material sensor MS6 is provided at the guiding member of the material container 65. The material sensor MS6 detects that the metal powder in the material container 65 is insufficient and needs replenishment.

An oxygen concentration meter OS2 may be provided at the material reuse device 6. In this embodiment, the oxygen concentration meter OS2 is connected to the classifier 63. When the oxygen concentration meter OS2 detects that an oxygen concentration in the material reuse device 6 has increased, the inert gas is supplied from the second inert gas supplier 2B to the material reuse device 6, or a supply amount of the inert gas is increased. In this manner, the inert gas concentration of the material reuse device 6 is controlled so as not to decrease.

The material supply pipeline 8C sends the metal powder from the transfer device 61 to the chamber 7. The material supply pipeline 8C includes a pipeline 8C1 that is connected to the material discharge port 61D of the transfer device 61 and the classifier 63, and a pipeline 8C2 that is connected to the classifier 63 and the material container 65. The material storage pipeline 8D sends the metal powder from the transfer device 61 or the classifier 63 to the material tank 62. The material storage pipeline 8D includes a pipeline 8D1 that is connected to the material discharge port 61D of the transfer device 61 and the material tank 62, and a pipeline 8D2 that is connected to the classifier 63 and the material tank 62.

The pipeline 8C1 and the pipeline 8D1 are connected to the switching valve S1, and the switching valve S1 switches a discharge destination of the metal material including impurities falling from the transfer device 61 to the material tank 62 or the classifier 63. The pipeline 8C2 and the pipeline 8D2 are connected to the switching valve S2, and the switching valve S2 switches a discharge destination of the metal material without impurities falling from the classifier 63 to the material tank 62 or the material container 65.

One or more on-off valves V6 and a ferrule FJ may be provided at the pipeline 8D2. The metal powder after the impurities are removed may be recovered from midway of the pipeline 8D2 to the empty material bottle MB. First, the on-off valve V6 is closed, and the pipeline 8D2 is separated at the position of the ferrule FJ. Then, the material bottle MB is connected to the pipeline 8D2, and the metal material falling from the classifier 63 is recovered to the material bottle MB. The metal material recovered to the material bottle MB may be used as the material of the additive manufacturing.

A controller of the additive manufacturing apparatus may be configured by any combination of hardware and software, and may include a CPU, a RAM, a ROM, an auxiliary storage device, and an input/output interface. The controller may also serve as a numeral controller that performs control associated with additive manufacturing. The controller is connected to the material sensors MS1, MS2, MS3, MS4, MS5, MS6, and MS7 and the oxygen concentration meters OS 1 and OS2, and may use the measurement results for controlling each part. The controller controls the pump 64, the on-off valves V1, V2, V3, V4, V5, V6, and V7, and the switching valves S1 and S2 to switch the path of the metal powder or the inert gas and transfer the metal powder through the desired path. However, the switching valves S1 and S2 may also be manually controlled.

Herein, an operation of the additive manufacturing apparatus according to this embodiment will be described.

Before performing additive manufacturing, the first inert gas supplier 2A supplies an inert gas to the chamber 7 to create an inert gas atmosphere in the chamber 7. Further, the second inert gas supplier 2B supplies the inert gas to the material reuse device 6 via the material tank 62 to create an inert gas atmosphere in the material reuse device 6. In the case where there is not sufficient metal powder stored in the material tank 62, the operator replenishes the metal powder from the material bottle MB to the material tank 62.

Next, the metal powder is replenished to the recoater 5. The switching valve S1 switches the discharge destination of the metal powder from the transfer device 61 to the classifier 63. The switching valve S2 switches the discharge destination of the metal powder from the classifier 63 to the material container 65. By driving the pump 64 with the on-off valve V4 being opened, the metal powder in the material tank 62 is transferred by the transfer device 61 and supplied to the material container 65 via the classifier 63. Then, the metal powder is supplied from the material container 65 to the recoater 5.

Upon start of the additive manufacturing, the additive manufacturing apparatus alternately repeats formation of a material layer and a solidified layer. The recoater 5 moves in the horizontal direction to form a material layer. The irradiator 4 irradiates the material layer with a laser beam to form a solidified layer. The build table 12 is lowered, and a material layer and a solidified layer are formed by the same procedure.

Herein, transfer of the metal powder during the additive manufacturing will be described. Upon detection of a shortage of the metal powder in the recoater 5 by the material sensor MS5, the metal powder is replenished from the material container 65 to the recoater 5. Upon detection of a shortage of the metal powder in the material container 65 by the material sensor MS6, the transfer device 61 transfers the metal powder from the first chute 14A, the second chute 14B, or the material tank 62 to the material container 65. At this time, the switching valve S1 selects the pipeline 8C1, and the switching valve S2 selects the pipeline 8C2. The supply source of the metal powder may be any of the first chute 14A, the second chute 14B, and the material tank 62, and a priority order for selecting the supply source may be predetermined. In this manner, the material reuse device 6 supplies the metal material into the chamber 7 via the material container 65. Since it takes some time for the classifier 63 to perform the operation of removing impurities, by storing the metal powder in the material container 65, it is possible to replenish the material to the recoater 5 while continuing the additive manufacturing.

When the material sensor MS1 detects that a predetermined amount of the metal powder has been stored in the first chute 14A, the metal powder may be recovered from the first chute 14A to the material tank 62. When the material sensor MS2 detects that a predetermined amount of the metal powder has been stored in the second chute 14B, the metal powder may be recovered from the second chute 14B to the material tank 62. At this time, in the case where the metal powder is to be recovered after removing the impurities, the switching valve S1 selects the pipeline 8C1, and the switching valve S2 selects the pipeline 8D2. In the case where the metal powder is to be recovered without removing the impurities, the switching valve S1 selects the pipeline 8D1. In this manner, the material reuse device 6 recovers the metal powder discharged out of the chamber 7 by using the transfer device 61 and accommodates the recovered metal powder into the material tank 62.

Herein, transfer of the metal powder after the additive manufacturing will be described. The operator performs a cleaning operation to recover the metal powder remaining in the chamber 7. The operator operates the suction nozzle 18 through the glove box 17B and recovers the metal powder from the chamber 7 to the material tank 62. In this manner, the operator can perform the cleaning operation with the front door 17 being closed and the chamber 7 being substantially sealed. Further, the metal powder stored in the first chute 14A and the second chute 14B is also recovered to the material tank 62. During the cleaning operation, the inert gas is supplied from the first inert gas supplier 2A and the second inert gas supplier 2B. The supply amount of the inert gas may be a relatively small amount at which the internal pressure of the chamber 7 is maintained at approximate atmospheric pressure.

When recovering the metal powder in the cleaning operation, in the case where the metal powder is to be recovered after removing the impurities, the switching valve S1 selects the pipeline 8C1, and the switching valve S2 selects the pipeline 8D2. In the case where the metal powder is to be recovered without removing the impurities, the switching valve S1 selects the pipeline 8D1. Since the amount of the metal powder recovered in the cleaning operation is relatively large, the metal powder may be recovered without removing the impurities to speed up the operation.

According to the additive manufacturing apparatus of this embodiment, it is possible to perform operations while keeping the metal powder under an inert gas atmosphere during the additive manufacturing and the cleaning operation. In principle, the metal powder does not come into contact with the outside air, which prevents degradation of the metal powder. Further, since the inert gas used for transferring the metal powder is returned to the chamber 7 by the pressure recovery pipeline 9G, the use amount of the inert gas can be reduced, and entrance of the outside air into the chamber 7 can be prevented. The additive manufacturing apparatus of this embodiment is particularly advantageous in the case where argon, which is relatively expensive, is used as the inert gas. Further, the additive manufacturing apparatus of this embodiment is particularly advantageous in the case where a metal material that is highly reactive with oxygen such as an aluminum material or a titanium material is used.

After completion of the cleaning operation, the metal powder may be recovered from the material tank 62. As described above, the material bottle MB may be connected to the pipeline 8D2, and the metal material may be recovered to the material bottle MB.

## Claims

1. An additive manufacturing apparatus comprising:
a chamber (7) that covers a build region, which is a region where a three-dimensional object is capable of being manufactured, and is filled with an inert gas;
an inert gas supplier (2A) that supplies the inert gas to the chamber (7);
a material recovery pipeline (8A) that is connected to the chamber (7) and through which a metal powder discharged from the chamber (7) flows;
a material tank (62) in which the metal powder is stored;
a material replenishment pipeline (8B) that is connected to the material tank (62) and the material recovery pipeline (8A) and through which the metal powder discharged from the material tank (62) flows;
a transfer device (61) that transfers the metal powder together with the inert gas and comprises: a vacuum container (61A); a material suction port (61C) provided at the vacuum container (61A) and connected to the material recovery pipeline (8A); a gas discharge port (61B) provided at the vacuum container (61A) to discharge the inert gas; and a material discharge port (61D) provided at the vacuum container (61A) to discharge the metal powder;
a classifier (63) that removes impurities from the metal powder transferred by the transfer device (61);
a gas discharge pipeline (9D) that is connected to the gas discharge port (61B) and the chamber (7); and
a pump (64) that is provided at the gas discharge pipeline (9D) and sends the inert gas discharged from the transfer device (61) to the chamber (7).

2. The additive manufacturing apparatus according to claim 1, further comprising a pressure recovery pipeline (9G) configured to supply the inert gas from the chamber (7) to the transfer device (61) to perform pressure recovery of the vacuum container (61A).

3. The additive manufacturing apparatus according to claim 2, further comprising an on-off valve (V7) that opens and closes the pressure recovery pipeline (9G), wherein
the on-off valve (V7) is configured to be closed during operation of the pump (64) and opened after the pump (64) stops.

4. The additive manufacturing apparatus according to claim 2 or 3, further comprising a first bypass pipeline (9E) that is connected to the chamber (7) and the material tank (62) and through which the inert gas flows, wherein
the pressure recovery pipeline (9G) is connected to the material recovery pipeline (8A) and the first bypass pipeline (9E).

5. The additive manufacturing apparatus according to any one of claims 1 to 4, wherein the transfer device (61) further comprises a bottom cover (61E) configured to be capable of opening and closing the material discharge port (61D).

6. The additive manufacturing apparatus according to any one of claims 1 to 5, wherein the transfer device (61) is installed at a highest position of a transfer path of the metal powder.

7. The additive manufacturing apparatus according to any one of claims 1 to 6, further comprising a casing (60) that accommodates the material tank (62), the transfer device (61), and the classifier (63).

8. The additive manufacturing apparatus according to any one of claims 1 to 7, wherein the metal powder is an aluminum material.

9. The additive manufacturing apparatus according to any one of claims 1 to 7, wherein the metal powder is a titanium material.

10. The additive manufacturing apparatus according to any one of claims 1 to 9, wherein the inert gas supplier (2A) is a gas cylinder that stores argon gas.

11. The additive manufacturing apparatus according to any one of claims 1 to 10, wherein the pump (64) is a vane pump.
